# EUROPEAN PATENT APPLICATION

(11) **EP 4 553 750 A1**
(43) Date of publication of application: **14.05.2025**
(21) Application number: 24211231.6
(22) Date of filing: 06.11.2024
(51) Int. Cl.: G06Q 50/20, G06N 20/00

(54) **METHOD AND SYSTEM FOR PROVIDING SPECIALIZED DOCUMENT SHARING PLATFORM**

(30) Priority: 07.11.2023 KR 20230152908
(71) Applicant: LG Management Development Institute Co., Ltd., Seoul 07336 (KR)
(72) Inventor: LEE, Moontae, 10595 Goyang-si, Gyeonggi-do (KR); CHO, Jiyong, 06718 Seoul (KR); PARK, Haeju, 13634 Seongnam-si, Gyeonggi-do (KR); JO, Yongrae, 07796 Seoul (KR); LEE, Kyungjae, 07372 Seoul (KR); PARK, Sunghyun, 08725 Seoul (KR); HWANG, Dasol, 07801 Seoul (KR); CHO, Minseok, 08725 Seoul (KR); KIM, Gyeonghun, 07628 Seoul (KR)
(74) Representative: BCKIP Part mbB

(57) **Abstract**

A method of providing a specialized document sharing platform by a platform application executed by at least one processor of a terminal includes obtaining a first specialized document, generating question and answer content for the first specialized document using a question and answer language model, generating promotional content, which comprises an online promotional material for the first specialized document, based on the question and answer content, providing a promotional material production workspace based on the promotional content, determining promotional start content, which comprises the promotional content to be registered on the specialized document sharing platform, using the promotional material production workspace, and providing the promotional start content using the specialized document sharing platform.

## Description

This application claims priority of Korean Patent Application No. 10-2023-0152908, filed on November 7, 2023.

### BACKGROUND

### Field

The present disclosure generally relates to a method and system for providing a specialized document sharing platform. More specifically, some embodiments of the present disclosure relate to a specialized document sharing platform provision method and system for generating question-and-answer content for a specialized document using a predetermined deep-learning neural network and providing promotional content based on the generated question-and-answer content.

### Description of Related Art

In general, most technical information provision services using the Internet simply display a list of information provided by an operator when a user accesses a technical information provision site via the Internet, or provide simple HTML data in the form of an abstract when a bookmark is clicked.

In addition, various companies, research institutes, public institutions, and/or universities have accumulated data on industrial technology knowledge information and research results, but the failure to properly utilize such data is a factor that hinders the development of national industrial technology.

Therefore, various companies, research institutes, public institutions, and/or universities need to distribute accumulated industrial technology knowledge information and data regarding research results while receiving appropriate compensation, and systems and service methods for promoting the distribution and transaction of industrial technology knowledge information by providing reliable data to those who request the industrial technology knowledge information are required.

Accordingly, various sharing platforms for the above-mentioned specialized documents (e.g., theses and/or reports) are currently being developed.

Such platforms enable sharing of various types of data such that specialized documents can be widely publicized and accordingly more research can be conducted, and allow more transparent research to be conducted through sharing of data, codes, and/or drafts derived from research processes.

In addition, since research processes are recorded, it is possible to provide a preemptive position in case of a controversy over research ideas in the future, and it is also possible to recommend research works by scholars in various fields and stages according to the research field and research topic, which has the effect of inducing a breakdown of the citation trend of the rich getting richer and the poor getting poorer, in which only papers by scholars who are already well-known in the relevant academic circles are mainly cited.

For example, such platforms include Arxiv, Open Science Framework (OSF), Dataverse, Figshare, and/or Github.

However, most of the conventional specialized document sharing platforms described above may provide search results that simply summarize or list at least one specialized document related to the content desired by a user, and thus additional efforts may be required to fully understand the content of the document according to the search results.

In addition, the conventional specialized document sharing platforms may have a limitation that the accuracy and quality of search results are relatively low with respect to documents that require innovation in knowledge processing and inference, such as specialized documents on in-depth technical information (e.g., scientific and technological papers).

Furthermore, most of the specialized document sharing platforms may be implemented as paid services that provide appropriate compensation to a provider who provides a specialized document as the number of subscriptions to the specialized document on a platform increases. However, most information providers may have limited knowledge of promotional methods or content production methods to increase the amount of sharing, and thus have difficulty actively promoting and distributing the specialized documents they have written.

### [Related Art Literature]

### [Patent Document]

Korean Patent No. 10-1341948 B1

### SUMMARY

According to some embodiments of the present disclosure, a specialized document sharing platform provision method and system may generate question-and-answer content for a specialized document using a predetermined deep-learning neural network and provide promotional content based on the generated question-and-answer content.

According to certain embodiments of the present disclosure, a specialized document sharing platform provision method and system may generate question-and-answer content using a language model specialized for specialized documents.

In addition, according to some embodiments the present disclosure, a specialized document sharing platform provision method and system may provide promotional content using a user interface (UI) by which generated question-and-answer content can be freely edited.

The technical objects to be achieved by the present disclosure and embodiments of the present disclosure are not limited to the technical objects described above, and other technical objects may be present.

A method of providing a specialized document sharing platform according to an embodiment of the present disclosure is a method of providing a specialized document sharing platform by a platform application executed by at least one processor of a terminal, the method including obtaining a first specialized document, generating question and answer content for the first specialized document on the basis of a question and answer language model, generating promotional content, which is an online promotional material for the first specialized document, based on the question and answer content, providing the promotional content on the basis of a promotional material production workspace, determining promotional start content, which is the promotional content to be registered on the specialized document sharing platform, on the basis of the promotional material production workspace, and providing the promotional start content on the basis of the specialized document sharing platform.

In another aspect, the generating question and answer content may include inputting the first specialized document to the question and answer language model, obtaining at least one piece of question and answer data including question data and answer data according to the first specialized document from the question and answer language model, and generating the question and answer content based on the at least one piece of question and answer data.

In another aspect, the obtaining at least one piece of question and answer data may include obtaining at least one piece of question data on the basis of a question deep-learning model included in the question and answer language model, and obtaining at least one piece of answer data corresponding to each of the at least one piece of question data on the basis of an answer deep-learning model included in the question and answer language model.

In another aspect, the answer deep-learning model may be a deep learning model for outputting the answer data on the basis of a multi-step inference process, wherein the multi-step inference process includes an associative selection process of determining an evidence paragraph related to the question data in the first specialized document, a rationale generation process of obtaining at least one piece of rationale data related to the question data on the basis of the evidence paragraph, and a systematic composition process of performing data processing based on the rationale data.

In another aspect, the promotional content may be content data configured on the basis of a predetermined data amount condition.

In another aspect, the determining promotional start content may include generating promotional edited content, which is the promotional content edited according to user input based on the promotional material production workspace.

In another aspect, the generating promotional edited content may include at least one of generating the promotional edited content according to user input for editing a composition of the question and answer content in the promotional content, and generating the promotional edited content according to user input for editing the content of the question and answer content in the promotional content.

In another aspect, the generating promotional edited content may include providing an editing assistant tool, which is a user interface for providing at least one of a predetermined image, table, and formula related to the first specialized document in a form that is able to be inserted into the question and answer content in the promotional content.

In another aspect, the generating promotional edited content may include providing a related document search function of automatically detecting and providing at least one other specialized document related to the question and answer content in the promotional content.

In another aspect, the determining the promotional start content may include determining either the promotional content or the promotional edited content as the promotional start content on the basis of user input based on the promotional material production workspace.

In another aspect, the method of providing a specialized document sharing platform may further include providing a specialized document search function based on the promotional start content on the basis of the specialized document sharing platform.

In another aspect, the method of providing a specialized document sharing platform may further include providing a specialized document sharing and citation function based on the promotional start content on the basis of the specialized document sharing platform.

In another aspect, the providing a specialized document sharing and citation function may include at least one of providing a promotional material identification code including an access uniform resource locator (URL) and a time stamp related to the promotional start content, and providing a question and answer identification code including an access URL and a time stamp related to question and answer content in the promotional start content.

In another aspect, the method of providing a specialized document sharing platform may further include providing a reader question recommendation function of obtaining and providing question data created by a user who receives the first specialized document on the basis of the specialized document sharing platform.

A system for providing a specialized document sharing platform according to an embodiment of the present disclosure includes at least one memory in which a platform application is stored, and at least one processor configured to read the platform application stored in the memory and provide a specialized document sharing platform, wherein instructions of the platform application include instructions for performing obtaining a first specialized document, generating question and answer content for the first specialized document on the basis of a question and answer language model, generating promotional content, which is an online promotional material for the first specialized document, based on the question and answer content, providing the promotional content on the basis of a promotional material production workspace, determining promotional start content, which is the promotional content to be registered on the specialized document sharing platform on the basis of the promotional material production workspace, and providing the promotional start content on the basis of the specialized document sharing platform.

According to some embodiments of the present disclosure, a method and system for providing a specialized document sharing platform can generate question-and-answer content for a specialized document using a predetermined deep-learning neural network and provide promotional content based on the generated question-and-answer content, thereby enabling a user to automatically obtain data in a question-and-answer format that efficiently includes the content of a specialized document without making any additional efforts and to utilize promotional content based on the obtained data.

According to certain embodiments of the present disclosure, a method and system for providing a specialized document sharing platform can generate question-and-answer content using a language model specialized for specialized documents, thereby providing question-and-answer content that resolves the problems of hallucination and vague answers, which are limitations of conventional general-purpose language models (e.g., OpenAI GPT, etc.).

Accordingly, according to some embodiments of the present disclosure, a method and system for providing a specialized document sharing platform can provide question-and-answer content that is faithful to questions, hallucination-controlled, and evidential using an advanced inference/estimation function implemented through a process similar to human cognitive inference.

In addition, according to certain embodiments of the present disclosure, a method and system for providing a specialized document sharing platform can provide promotional content using a user interface (UI) through which generated question-and-answer content can be freely edited, thereby enabling users to create customized promotional materials optimized for a form that the users want with a higher degree of freedom and actively perform promotional activities using the same, beyond the level of simply sharing specialized documents.

In addition, according to some embodiments of the present disclosure, a method and system for providing a specialized document sharing platform can allow high-quality promotional materials optimized for user needs while including in-depth and practical question-and-answer content obtained from a deep learning model specialized in specialized documents to be easily generated and utilized.

### BRIEF DESCRIPTION OF THE DRAWING

FIG. 1 is a conceptual diagram of a system for providing a specialized document sharing platform according to an embodiment of the present disclosure.
FIG. 2 is a block diagram of a terminal according to an embodiment of the present disclosure.
FIG. 3 is a conceptual diagram illustrating a question-and-answer language model according to an embodiment of the present disclosure.
FIGS. 4 and 5 are diagrams illustrating a multi-step inference process of an answer deep-learning model according to an embodiment of the present disclosure.
FIG. 6 is a flowchart illustrating a method of providing an author-side specialized document sharing platform according to an embodiment of the present disclosure.
FIG. 7 shows an example of question-and-answer content according to an embodiment of the present disclosure.
FIG. 8 shows an example of promotional content according to an embodiment of the present disclosure.
FIGS. 9 and 10 are exemplary diagrams illustrating a method for adding question-and-answer data based on user input according to an embodiment of the present disclosure.
FIG. 11 is a diagram illustrating a method of providing an editing assistant tool and/or a related document search function according to an embodiment of the present disclosure.
FIG. 12 is a flowchart for illustrating a method of providing a reader-side specialized document sharing platform according to an embodiment of the present disclosure.
FIG. 13 is an exemplary diagram for illustrating a method of providing specialized document sharing and citation functions according to an embodiment of the present disclosure.

### DETAILED DESCRIPTION

The present disclosure can be modified in various manners and can have various embodiments, and specific embodiments are illustrated in the drawings and described in detail in the detailed description. The effects and features of the present disclosure and methods for achieving the same will become clear with reference to the embodiments described in detail below along with the drawings. However, the present disclosure is not limited to the embodiments disclosed below and can be implemented in various forms.

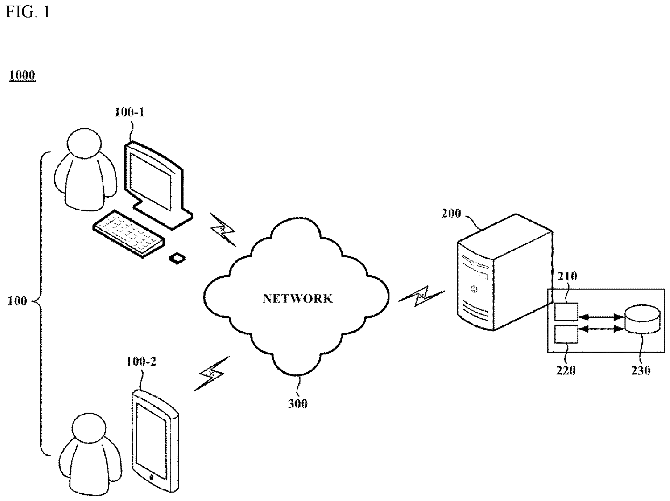

FIG. 1 is a conceptual diagram of a system for providing a specialized document sharing platform according to an embodiment of the present disclosure.

Referring to FIG. 1, a system 1000 for providing a specialized document sharing platform according to an embodiment of the present disclosure may be configured to provide a specialized document sharing platform provision service for generating question-and-answer content for specialized documents using a predetermined deep-learning neural network and providing promotional content based on the generated question-and-answer content.

In an embodiment, the system 1000 for providing a specialized document sharing platform configured to provide the specialized document sharing platform provision service may include a terminal 100, a platform provision server 200, and a network 300.

Here, the terminal 100 and/or the platform provision server 200 may be connected via the network 300.

Here, the network 300 according to an embodiment may mean a connection structure for information exchange between nodes, such as the terminal 100 and/or the platform provision server 200.

Examples of the network 300 include, but are not limited to, a 3rd Generation Partnership Project (3GPP) network, a Long Term Evolution (LTE) network, a World Interoperability for Microwave Access (WIMAX) network, the Internet, a Local Area Network (LAN), a Wireless Local Area Network (WLAN), a Wide Area Network (WAN), a Personal Area Network (PAN), a Bluetooth network, a satellite broadcast network, an analog broadcast network, and/or a Digital Multimedia Broadcasting (DMB) network.

Hereinafter, the terminal 100 and the platform provision server 200 included in the system 1000 for providing a specialized document sharing platform will be described in detail with reference to FIG. 1.

### - Terminal 100

The terminal 100 according to an embodiment of the present disclosure may be a predetermined computing device on which a platform application (hereinafter, an application) providing a specialized document sharing platform provision service is installed.

For example, the terminal 100 may include a mobile type computing device 100-1 and/or a desktop type computing device 100-2 on which an application is installed.

Here, the mobile type computing device 100-1 may be a mobile device on which an application is installed.

For example, the mobile type computing device 100-1 may include a smartphone, a mobile phone, a digital broadcasting device, a personal digital assistant (PDA), a portable multimedia player (PMP), and/or a tablet personal computer (PC), but not limited thereto.

In addition, the desktop type computing device 100-2 may be a wired and/or wireless communication-based device on which an application is installed.

For example, the desktop type computing device 100-2 may include a personal computer such as a stationary desktop PC, a laptop computer, and/or an ultrabook.

According to an embodiment, the terminal 100 may further include a server type computing device that provides a specialized document sharing platform provision service environment.

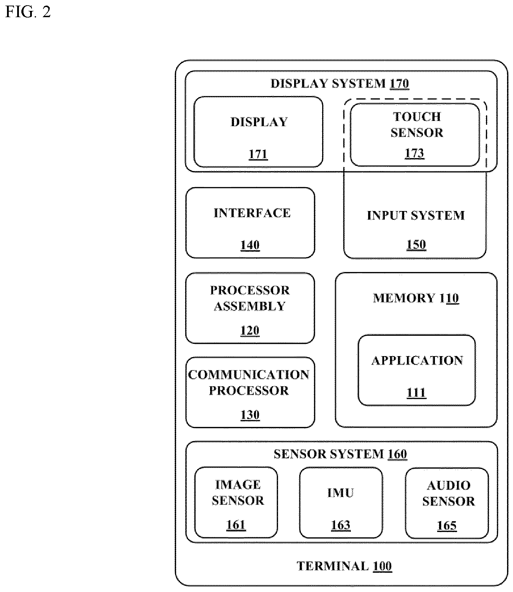

FIG. 2 is a block diagram of a terminal according to an embodiment of the present disclosure.

Referring to FIG. 2, the terminal 100 may include a memory 110, a processor assembly 120, a communication processor 130, an interface 140, an input system 150, a sensor system 160, and a display system 170. In an embodiment, one or more the above listed components of the terminal 100 may be disposed in a housing.

Specifically, the memory 110 may store an application 111.

Here, the application 111 may comprise one or more of various application programs, data, and instructions for providing a specialized document sharing platform provision service environment.

That is, the memory 110 may store instructions, data, and the like that can be used to create a specialized document sharing platform provision service environment.

In addition, the memory 110 may include a program area and a data area.

Here, the program area according to an embodiment may be linked between an operating system (OS) that boots the terminal 100 and functional elements.

In addition, the data area according to an embodiment may store data generated when the terminal 100 is used or the program is executed.

In addition, the memory 110 may include at least one non-transitory computer-readable storage medium and a temporary computer-readable storage medium.

For example, the memory 110 may be various storage devices such as a ROM, an EPROM, a flash drive, and a hard drive and may include a web storage that performs the storage function of the memory 110 on the Internet.

The processor assembly 120 may include at least one processor configured to execute instructions of the application 111 stored in the memory 110 to perform various operations for creating or providing a specialized document sharing platform provision service environment.

In an embodiment, the processor assembly 120 may control the overall operation of the components of the terminal 100 through the application 111 of the memory 110 to provide the specialized document sharing platform provision service.

For instance, the processor assembly 120 may include a system on chip (SOC) suitable for the terminal 100 including a central processing unit (CPU) and/or a graphic processing unit (GPU).

In addition, the processor assembly 120 may execute the operating system (OS) and/or application programs stored in the memory 110.

Further, the processor assembly 120 may control each component of the terminal 100.

In addition, the processor assembly 120 may communicate with each component internally via a system bus and may include one or more bus structures including a local bus.

Additionally, the processor assembly 120 may include, for example, but not limited to, at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The communication processor 130 may include one or more devices configured to communicate with one or more external devices. The communication processor 130 may perform communication via a wireless or wired network.

Specifically, the communication processor 130 may communicate with the terminal 100 that stores a content source for creating a specialized document sharing platform provision service environment.

In addition, the communication processor 130 may communicate with various user input components, such as a controller that receives user input.

In an embodiment, the communication processor 130 may transmit or receive various types of data related to the specialized document sharing platform provision service to or from another terminal 100 and/or an external server.

The communication processor 130 may wirelessly transmit or receive data to or from at least one of a base station, another terminal 100, and an arbitrary server on a mobile communication network constructed through a communication device that can perform technical standards or communication methods for mobile communication (e.g., Long Term Evolution (LTE), Long Term Evolution-Advanced (LTE-A), 5G New Radio (NR), and WI-FI) or a shortrange communication method.

The sensor system 160 may include various sensors such as an image sensor 161, a position sensor (IMU) 163, an audio sensor 165, a distance sensor, a proximity sensor, and a contact sensor.

Here, the image sensor 161 may capture images (e.g. still or moving images and/or videos) of a physical space around the terminal 100.

Specifically, the image sensor 161 may capture a physical space through a camera disposed toward the outside of the terminal 100.

In an embodiment, the image sensor 161 may be disposed at the front and/or rear of the terminal 100 to capture a physical space in the direction at which the image sensor 161 is disposed.

In an embodiment, the image sensor 161 may capture and acquire various images (e.g., images of specialized documents, etc.) related to the specialized document sharing platform provision service.

The image sensor 161 may include an image sensor device and an image processing module.

Specifically, the image sensor 161 may process still images or moving images obtained by the image sensor device (e.g., a CMOS or a CCD).

In addition, the image sensor 161 may process still images or moving images obtained through the image sensor device using the image processing module to extract necessary information and transmit the extracted information to the processor assembly 120.

The image sensor 161 may be a camera assembly including at least one camera.

Here, the camera assembly may include a general camera that captures a visible light band, and may further include special cameras such as an infrared camera and a stereo camera.

In addition, the image sensor 161 may be included in the terminal 100 and operated according to an embodiment, or may be included in an external device (e.g., an external server, etc.) and communicationally connected to the terminal 100 using the communication processor 130 and/or interface 140 described above.

The position sensor (IMU) 163 may detect at least one of the movement and acceleration of the terminal 100. For example, the position sensor 163 may be configured by a combination of various position sensors such as an accelerometer, a gyroscope, and/or a magnetometer.

In addition, the position sensor (IMU) 163 may recognize spatial information on the physical space around the terminal 100 in connection with the position communication processor 130, such as a GPS of the communication processor 130.

The audio sensor 165 may sense or recognize sounds around the terminal 100.

For example, the audio sensor 165 may include a microphone configured to detect audio input of a user using the terminal 100.

In an embodiment, the audio sensor 165 may receive audio data required for the specialized document sharing platform provision service from a user.

The interface 140 may connect the terminal 100 to one or more other devices such that the terminal 100 can communicate with other devices.

Specifically, the interface 140 may include wired and/or wireless communication devices compatible with one or more different communication protocols.

Through this interface 140, the terminal 100 may be connected to various input and/or output devices.

For example, the interface 140 may be connected to an audio output device such as a headset port or a speaker to output audio.

For example, the audio output device is described as being connected through the interface 140, but the audio output device may be included in the terminal 100 in an embodiment.

In addition, the interface unit 140 may be connected to an input device such as a keyboard and/or a mouse to obtain user input, for example.

The interface 140 may include at least one of a wired/wireless headset port, an external charger port, a wired/wireless data port, a memory card port, a port for connecting a device equipped with an identification module, an audio input/output (I/O) port, a video I/O port, an earphone port, a power amplifier, an RF circuit, a transceiver, and other communication circuits.

The input system 150 may detect user input (e.g., a gesture, a voice command, an operation of a button, touch, or any type of input) related to the specialized document sharing platform provision service.

Specifically, the input system 150 may include a button, a touch sensor, the image sensor 161 that detects a user motion input, and/or the audio sensor 165 that detects a user audio input.

In addition, the input system 150 may be connected to an external controller through the interface 140 to receive user input.

The display system 170 may output various types of information related to the specialized document sharing platform provision service as graphic images.

In an embodiment, the display system 170 may display various user interfaces, specialized document data, question-and-answer content, and/or promotional content for the specialized document sharing platform provision service.

Such a display system may include, for instance, but is not limited to, at least one of a liquid crystal display (LCD), a thin film transistor-liquid crystal display (TFT LCD), an organic light-emitting diode (OLED), a flexible display, a 3D display, and/or an e-ink display.

In addition, according to an embodiment, the display system 170 may include a display 171 that outputs an image and a touch sensor 173 that detects user touch input.

For example, the display 171 may be implemented as a touchscreen by forming a layer structure with the touch sensor 173 or forming an integral structure.

Such a touch screen may function as a user input unit that provides an input interface between the terminal 100 and the user, and may provide an output interface between the terminal 100 and the user.

The terminal 100 according to an embodiment of the present disclosure may perform deep learning related to the specialized document sharing platform provision service on the basis of a predetermined deep-learning neural network.

Here, the deep-learning neural network according to an embodiment may include, for example, but is not limited to, OpenAI GPT, Instruct GPT, Bidirectional LSTM (Bi-LSTM), Long Short-Term Memory models (LSTM), Multi-Layer Perceptron (MLP), EfficientNet, ResNet, Autoregressive Integrated Moving Average (ARIMA), Vector Auto Regression (VAR), Recurrent Neural Networks (RNN), Gated Recurrent Unit (GRU), Generative Adversarial Networks (GAN), DualStyleGAN, StyleGAN, Graph Convolution Network (GCN), Convolution Neural Network (CNN), Deep Plane Sweep Network (DPSNet), Attention Guided Network (AGN), Regions with CNN features (R-CNN), Fast R-CNN, Faster R-CNN, Mask R-CNN, and/or U-Net network.

Specifically, in an embodiment, the terminal 100 may perform deep learning configured for the specialized document sharing platform provision service by operating in connection with at least one deep-learning neural network capable of implementing a question and answer language model according to an embodiment of the present disclosure.

Here, the question and answer language model in an embodiment may perform deep learning by receiving predetermined specialized document (e.g., a thesis and/or report) data and outputting at least one question data and answer data set having an organic flow based on the input specialized document data.

However, the present disclosure does not limit or restrict a deep learning algorithm itself that implements the question and answer language model, and the question-and-answer language model according to an embodiment of the present disclosure may be implemented based on at least one known deep learning algorithm.

On the other hand, according to an embodiment, the terminal 100 may further perform one or some of functional operations performed by the platform provision server 200 which will be described below.

### - Platform provision server 200

The platform provision server 200 according to an embodiment of the present disclosure may perform a series of processes for providing a specialized document sharing platform provision service.

Specifically, in an embodiment, the platform provision server 200 may provide a specialized document sharing platform provision service by exchanging data necessary for operating a specialized document sharing platform provision process in an external device such as the terminal 100 with the external device.

For example, the platform provision server 200 may provide an environment in which the application 111 can operate on an external device (e.g., the mobile computing device 100-1 and/or the desktop type computing device 100-2 in the embodiment).

To this end, the platform provision server 200 may include an application program, data, and/or instructions for operation of the application 111 and may transmit or receive various types of data based on the same to or from the external device.

In addition, in an embodiment, the platform provision server 200 may obtain a predetermined specialized document.

In addition, in an embodiment, the platform provision server 200 may generate question-and-answer content based on the obtained specialized document.

Here, the question-and-answer content according to an embodiment may include content that visualizes at least one question data and answer data set obtained through the question-and-answer language model according to an embodiment of the present disclosure in a predetermined manner.

In addition, in an embodiment, the platform provision server 200 may generate promotional content based on the generated question-and-answer content.

Here, the promotional content according to an embodiment may comprise an online promotional material for the purpose of promoting the specialized document.

Further, in an embodiment, the platform provision server 200 may provide a promotional material production workspace based on the generated promotional content.

Here, the promotional material production workspace according to an embodiment may include a user interface for determining promotional start content.

Here, the promotional start content according to an embodiment may comprise promotional content that is finally registered and shared on the specialized document sharing platform.

Further, in an embodiment, the platform provision server 200 may determine promotional start content based on the provided promotional material production workspace.

In addition, in an embodiment, the platform provision server 200 may provide the determined promotional start content.

Further, in an embodiment, the platform provision server 200 may perform a specialized document search function based on the specialized document sharing platform.

That is, the platform provision server 200 may perform a specialized document search function for searching for at least one specialized document registered in the specialized document sharing platform.

In addition, in an embodiment, the platform provision server 200 may perform a specialized document sharing and citation function based on the specialized document sharing platform.

Specifically, the platform provision server 200 may perform a specialized document sharing and citation function for sharing and citing promotional start content, question data, and/or answer data related to a predetermined specialized document.

In addition, in an embodiment, the platform provision server 200 may perform a reader question recommendation function based on the specialized document sharing platform.

In other words, the platform provision server 200 may perform a reader question recommendation function for generating and providing suggested question data, which is question data written by a side receiving a predetermined specialized document (for example, a reader side in an embodiment).

Further, in an embodiment, the platform provision server 200 may perform deep learning configured for the specialized document sharing platform provision service on the basis of a predetermined deep-learning neural network.

Specifically, in an embodiment, the platform provision server 200 may perform the deep learning configured for the specialized document sharing platform provision service by operating in connection with at least one deep-learning neural network capable of implementing or providing the question and answer language model according to an embodiment of the present disclosure.

More specifically, in an embodiment, the platform provision server 200 may read a predetermined deep-learning neural network driving program constructed to perform the deep learning from a memory module 230.

Then, the platform provision server 200 may perform the deep learning configured for the specialized document sharing platform provision service according to the read predetermined deep-learning neural network system.

Here, the deep-learning neural network according to an embodiment may include, for example, but not limited to, OpenAI GPT, Instruct GPT, Bidirectional LSTM (Bi-LSTM), Long Short-Term Memory models (LSTM), Multi-Layer Perceptron (MLP), EfficientNet, ResNet, Autoregressive Integrated Moving Average (ARIMA), Vector Auto Regression (VAR), Recurrent Neural Networks (RNN), Gated Recurrent Unit (GRU), Generative Adversarial Networks (GAN), DualStyleGAN, StyleGAN, Graph Convolution Network (GCN), Convolution Neural Network (CNN), Deep Plane Sweep Network (DPSNet), Attention Guided Network (AGN), Regions with CNN features (R-CNN), Fast R-CNN, Faster R-CNN, Mask R-CNN, and/or U-Net network.

Here, according to an embodiment, the deep-learning neural network may be included in the platform provision server 200 or may be implemented as another device and/or a server separate from the platform provision server 200.

In the following description, the deep-learning neural network is described as an apparatus included and implemented in the platform provision server 200, but the present disclosure is not limited thereto.

In addition, in an embodiment, the platform provision server 200 may store and manage various application programs, instructions, and/or data for implementing the specialized document sharing platform provision service.

In an embodiment, the platform provision server 200 may store and manage at least one piece of specialized document data, question-and-answer content, promotional content, data processing algorithms, deep learning algorithms, and/or user interfaces.

However, in an embodiment of the present disclosure, the functional operations that the platform provision server 200 may perform are not limited to those described above, and the platform provision server 200 may be configured to further perform other functional operations.

Referring to FIG. 1, the platform provision server 200 may be implemented as a computing device or computer including at least one processor module 210 for data processing, at least one communication module or communicator 220 for data exchange with an external device, and at least one memory module 230 for storing various application programs, data, and/or instructions for providing the specialized document sharing platform provision service in an embodiment.

Here, the memory module 230 may store any one or more of an operating system (OS), various application programs, data, and instructions for providing the specialized document sharing platform provision service.

In addition, the memory module 230 may include a program area and a data area.

Here, the program area according to an embodiment may be linked between the operating system (OS) that boots the server and functional elements.

In addition, the data area according to an embodiment may store data generated when the server 200 is used or the program is executed.

Further, the memory module 230 may be various storage devices such as a ROM, a RAM, an EPROM, a flash drive, and a hard drive and may also be a web storage that performs the storage function of the memory module 230 on the Internet.

In addition, the memory module 230 may be a removable storage medium included the server 200.

The processor module 210 may control the overall operation of each unit of the server 200 described above in order to implement the specialized document sharing platform provision service.

For example, the processor module 210 may be a system on chip (SOC) suitable for a server including a central processing unit (CPU) and/or a graphic processing unit (GPU).

In addition, the processor module 210 may execute the operating system (OS) and/or application programs stored in the memory module 230.

Further, the processor module 210 may control each component included the server 200.

In addition, the processor module 210 may communicate with each component internally through a system bus, and may include one or more predetermined bus structures including a local bus.

In addition, the processor module 210 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

In the above description, it has been described that the platform provision server 200 according to an embodiment of the present disclosure performs the functional operations described above Alternatively, according to various embodiments, one or some of the functional operations performed by the platform provision server 200 may be performed by an external device (e.g., the terminal 100), and/or one or some of the functional operations performed by the external device may be performed by the platform provision server 200 if necessary.

### - Question and Answer Language Model (QALM)

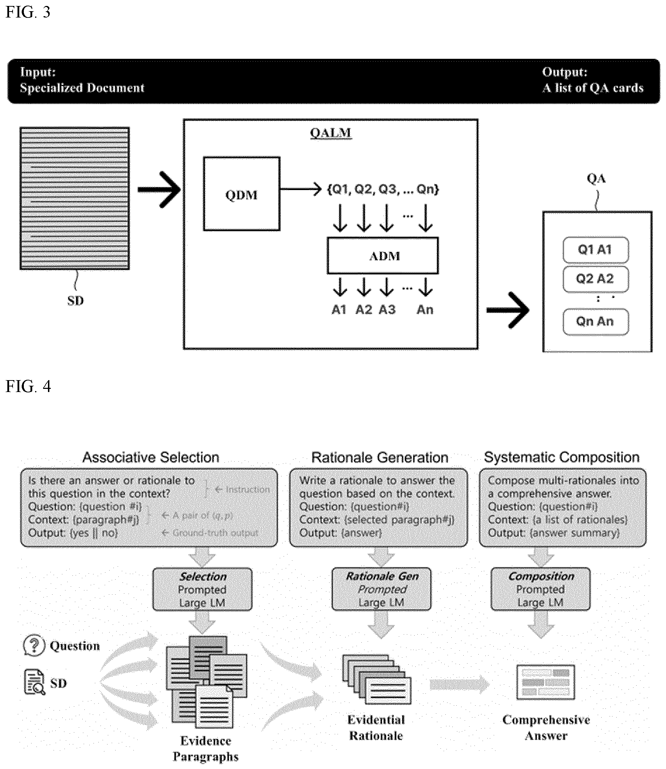

FIG. 3 is a conceptual diagram illustrating a question and answer language model (QALM) according to an embodiment of the present disclosure.

Referring to FIG. 3, the question and answer language model QALM according to an embodiment of the present disclosure may include a deep learning model configured to generate and provide at least one question data and answer data set QA (hereinafter, question and answer data) having an organic flow based on a predetermined specialized document SD (for example, a thesis and/or report).

For example, the question and answer language model QALM according to an embodiment may comprise a deep learning model configured to receive a predetermined specialized document data and output at least one question and answer data QA having an organic flow based on the input specialized document data.

Here, the question data and answer data QA according to an embodiment may have a structure that is connected according to a series of organic flows based on information included in the specialized document SD.

That is, in an embodiment, the question data and the answer data may be question and answer data QA in a more cognitive form beyond the typical question and answer data form of an extraction method that follows the standardized structure of a specialized document SD (e.g., an introduction, research problem, research methodology, research results, and/or research conclusion according to a table of contents of a general paper).

Specifically, referring to FIG. 3, the question and answer language model QALM in an embodiment may include a question deep-learning model (QDM) and an answer deep-learning model (ADM).

Specifically, the question deep-learning model QDM according to an embodiment may be a deep learning model configured to receive a predetermined specialized document data and output at least one piece of question data Q1, Q2, Q3, ..., Qn based on the input specialized document data.

In an embodiment, the question deep-learning model QDM may generate 1) question data based on information included in the specialized document SD, 2) question data based on previously generated question data, 3) question data based on previously generated answer data, and/or 4) question data based on other information related to information included in the specialized document SD.

Here, the question deep-learning model QDM in an embodiment may generate one or more pieces of question data as described above such that the question data is connected according to an organic flow.

For example, the question deep-learning model QDM may generate first question data based on a predetermined specialized document, obtain first answer data which is answer data for the generated first question data, and generate second question data based on the obtained first answer data and/or the first question data.

Therefore, the question deep-learning model QDM may provide more in-depth and higher quality question data than question data generated based only on entities and/or relationships between entities disclosed in a specialized document SD.

The answer deep-learning model ADM according to an embodiment may be a deep learning model configured to receive predetermined specialized document data and question data and output at least one piece of answer data A1, A2, A3, ..., An based on the input specialized document data and question data.

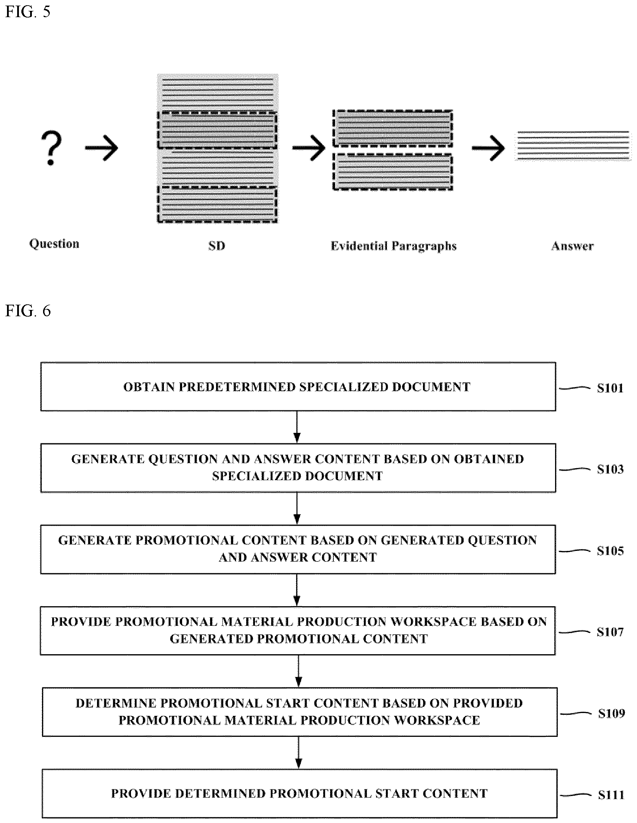

FIGS. 4 and 5 are diagrams illustrating a multi-step inference process of the answer deep-learning model ADM according to an embodiment of the present disclosure.

Specifically, referring to FIGS. 4 and 5, the answer deep-learning model ADM according to an embodiment may generate answer data according to a multi-step inference process.

Here, the multi-step inference process according to an embodiment may have a structured process for generating answer data based on predetermined specialized document data and question data using deep learning.

The multi-step inference process may include an associative selection process, a rationale generation process, and a systematic composition process.

More specifically, the answer deep-learning model ADM according to the embodiment may 1) determine a paragraph (hereinafter, evidence paragraph) in a specialized document SD linked to question data (associative selection process).

Specifically, the answer deep-learning model ADM may extract at least one evidence paragraph containing an answer and/or rationale for the question data, from among K (K≥1) paragraphs included in the specialized document SD.

Accordingly, the answer deep-learning model ADM may generate answer data based on more extended rationale data in comparison to the conventional method of extracting a short answer to predetermined question data.

In addition, in an embodiment, the answer deep-learning model ADM may 2) obtain rationale data for question data based on the determined evidence paragraph (rationale generation process).

Here, rationale data according to an embodiment may include data that serves as the basis for generating answer data for question data.

For instance, in an embodiment, the rationale data may be a collection of various types of data utilized when generating answer data.

Specifically, in an embodiment, the answer deep-learning model ADM may detect main answer data, which is data including a direct answer to question data based on at least one evidence paragraph, explanatory sentence data, which is data explaining the direct answer in detail, and/or auxiliary information data, which is data including related background knowledge.

The answer deep-learning model ADM may obtain rationale data as described above on the basis of the detected data.

In addition, in an embodiment, the answer deep-learning model ADM may 3) generate answer data based on the obtained rationale data (systematic composition process).

Specifically, in the embodiment, the answer deep-learning model ADM may generate answer data by performing data processing based on the obtained rationale data.

In an embodiment, the answer deep-learning model ADM may generate answer data by performing predetermined data processing (e.g., removing redundant text) to improve the conciseness and readability of an answer based on evidence data.

As described above, the answer deep-learning model ADM in an embodiment can extract an evidence paragraph that can answer question data from a specialized document SD, generate an evidential rationale on the basis of the content of the extracted evidence paragraph, and provide answer data that provides a more in-depth answer based on the generated evidential rationale.

That is, the answer deep-learning model ADM in an embodiment may be implemented as a language model specialized for specialized documents SD that solves the problems of hallucination and vague answers, which are limitations of existing general-purpose language models (e.g., OpenAI GPT, etc.) when performing a question and answer task for specialized documents SD.

Accordingly, the system 1000 for providing a specialized document sharing platform according to some embodiments of the present disclosure can provide or generate answer data that is faithful to a question, hallucination-controlled, and evidential on the basis of the advanced inference/estimation function implemented as a process similar to human cognitive inference.

The question and answer language model QALM including the above-mentioned question deep-learning model QDM and answer deep-learning model ADM may generate at least one piece of question and answer data QA ((Q1, A1), (Q2, A2), ..., (Qn, An)) by mutually matching at least one piece of question data Q1, Q2, Q3, ..., Qn obtained through the question deep-learning model QDM and at least one piece of answer data A1, A2, A3, ..., An obtained through the answer deep-learning model ADM based on each piece of question data.

Here, in an embodiment, the question and answer language model QALM may generate at least one piece of question and answer data QA that is listed in order according to organic flow.

In addition, in an embodiment, the question and answer language model QALM may provide or output at least one piece of generated question and answer data QA.

### - Method of providing specialized document sharing platform

Hereinafter, a method of generating question-and-answer content for a specialized document SD using a predetermined deep-learning neural network and providing promotional content based on the generated question-and-answer content by the application 111 executed by at least one processor of the terminal 100 (i.e., a method of implementing a specialized document sharing platform provision service) according to an embodiment of the present disclosure will be described in detail with reference to the drawings.

For illustration purposes only, the method of providing a specialized document (SD) sharing platform will be described by being divided into a method of providing a specialized document (SD) sharing platform on an author side and a method of providing a specialized document (SD) sharing platform on a reader side. However, various embodiments may be implemented in such a manner that at least some of embodiments including the above-mentioned providing methods are organically combined and operated.

In an embodiment of the present disclosure, at least one processor of the terminal 100 may execute at least one application 111 stored in at least one memory 110 or cause the same to operate in the background state.

In the following embodiment, the operation of at least one processor of the terminal 100 to execute instructions of the application 111 in order to perform the method of providing a specialized document (SD) sharing platform will be described as performing the method by the application 111.

### [Method of providing a specialized document sharing platform on an author side]

FIG. 6 is a flowchart illustrating a method of providing a specialized document (SD) sharing platform on an author side according to an embodiment of the present disclosure.

Referring to FIG. 6, in an embodiment, the application 111 executed by at least one processor of the terminal 100 or operating in a background state may obtain a predetermined specialized document SD (S101).

Specifically, the application 111 may obtain a predetermined specialized document SD (e.g., a thesis and/or report) based on a specialized document (SD) sharing platform according to an embodiment of the present disclosure.

For instance, the application 111 may obtain a specialized document SD uploaded on the specialized document (SD) sharing platform through user input.

In addition, in an embodiment, the application 111 may generate question-answer content based on the obtained specialized document SD (S103).

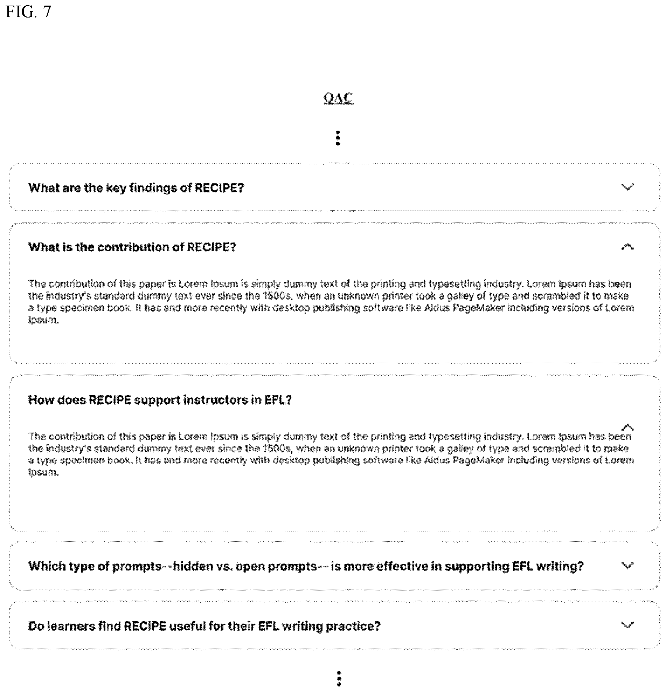

FIG. 7 shows an example of question-and-answer content according to an embodiment of the present disclosure.

Here, question and answer content QAC according to an embodiment may include content that visualizes at least one piece of question and answer data QA obtained through the question and answer language model QALM according to an embodiment of the present disclosure according to a predetermined method.

Specifically, in an embodiment, the application 111 may generate the question and answer content QAC in association with the question and answer language model QALM.

More specifically, in an embodiment, the application 111 may input the obtained specialized document (SD) data as described above to the question and answer language model QALM.

Then, the question and answer language model QALM may obtain at least one piece of question data Q1, Q2, Q3, ..., Qn based on the input specialized document (SD) data on the basis of the question deep-learning model QDM in an embodiment.

In addition, the question and answer language model QALM may obtain at least one piece of answer data A1, A2, A3, ..., An based on the input specialized document (SD) data and the question data on the basis of the answer deep-learning model ADM in an embodiment.

Then, the question and answer language model QALM may generate at least one piece of question and answer data QA ((Q1, A1), (Q2, A2), ..., (Qn, An)) by matching the at least one piece of obtained question data Q1, Q2, Q3, ..., Qn with at least one piece of answer data A1, A2, A3, ..., An corresponding to each piece of question data in an embodiment.

In addition, the question and answer language model QALM in an embodiment may provide at least one piece of generated question and answer data QA to the application 111.

Accordingly, in an embodiment, the application 111 may obtain at least one piece of question and answer data QA with respect to the specialized document SD from the question and answer language model QALM.

In addition, in an embodiment, the application 111 may generate question and answer content QAC based on the at least one piece of obtained question and answer data QA.

As an embodiment, the application 111 may generate question and answer content QAC by visualizing the at least one piece of question and answer data QA as a predetermined graphic image.

Here, according to an embodiment, the application 111 may generate question and answer content QAC including a predetermined evidence paragraph identification code.

The evidence paragraph identification code according to an embodiment may comprise an identification code corresponding to a predetermined evidence paragraph among identification codes (e.g., serial numbers in a preset format, or the like) assigned to paragraphs in the specialized document SD.

Specifically, the application 111 may detect at least one evidence paragraph corresponding to each piece of answer data in the question and answer content QAC in an embodiment.

In addition, the application 111 may extract an identification code (i.e., an evidence paragraph identification code) corresponding to the detected evidence paragraph.

The application 111 may generate a question and answer content QAC that has or displays the extracted at least one evidence paragraph identification code by matching the same with each piece of answer data corresponding thereto.

Accordingly, the application 111 may clearly present a paragraph in the specialized document SD that discloses or shows the content that is the basis of each piece of answer data, and the location of the paragraph such that they can be easily checked.

In addition, according to an embodiment, the application 111 may generate question and answer content QAC that includes predetermined down-feature data.

Here, the down-feature data according to an embodiment may include data obtained by reducing the amount of information of predetermined core data (e.g., images, tables, and/or formulas) in the specialized document SD.

That is, in an embodiment, the down-feature data may include data obtained by converting characteristic feature values contained in predetermined core data in the specialized document SD according to a predetermined method to reduce the amount of the core data.

Specifically, when the application 111 generates question and answer content QAC based on question and answer data QA obtained from the question and answer language model QALM, the application 111 may determine whether predetermined answer data includes core data in an embodiment.

Here, if the application 111 determines that core data is present in the predetermined answer data, the application 111 may generate down-feature data corresponding to the core data.

In an embodiment, the application 111 may generate the down-feature data by performing data processing including data type conversion, data value removal, and/or data amount compression on the basis of the core data.

For example, if the core data is in the form of a table, the application 111 may generate down-feature data that modifies the table into a simple bar graph.

In addition, in an embodiment, the application 111 may replace core data corresponding to the down-feature data with the generated down-feature data.

That is, the application 111 may replace core data in the question and answer data QA obtained from the question and answer language model QALM with down-feature data.

In an embodiment, the application 111 may generate question and answer content QAC based on the question and answer data QA in which the core data is replaced with the down-feature data.

In this manner, the application 111 may reduce the amount of information of data that is determined to be core data of a specialized document SD such that the specialized document SD is exposed with a reduced amount of data.

Accordingly, according to certain embodiments of the present disclosure, the application 111 can prevent a situation in which core content in a specialized document SD is excessively disclosed by promotional content provided later and can also prevent a problem that subscriptions and/or citations to the specialized document SD may be reduced due to promotional content.

Here, according to an embodiment, the application 111 may convert core data into down-feature data on the basis of user input.

In an embodiment, the application 111 may obtain user input for setting a degree of conversion, conversion method, and/or details of conversion with respect to core data.

In addition, the application 111 may generate down-feature data according to the obtained user input.

That is, the application 111 may generate question and answer content QAC based on down-feature data edited in a form optimized for user's needs.

In addition, in an embodiment, the application 111 may generate promotional content based on the generated question and answer content QAC (S 105).

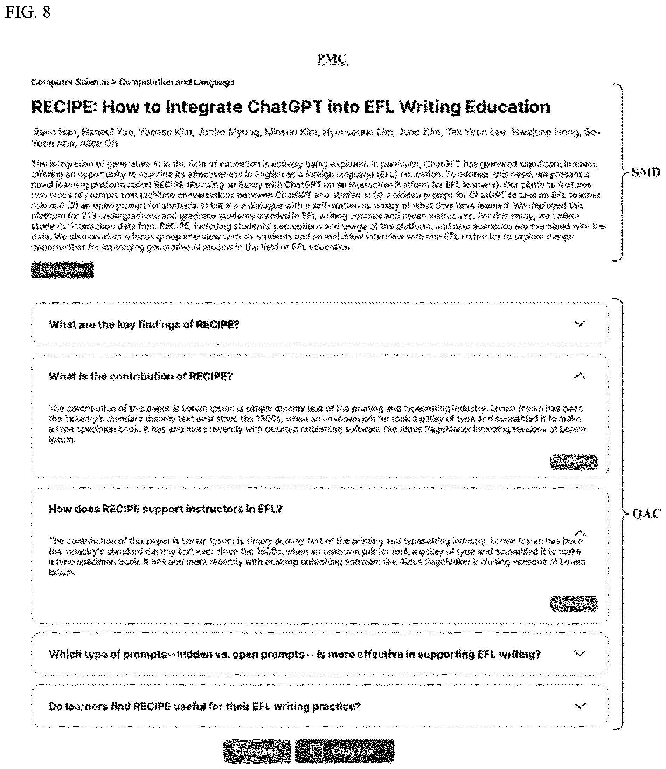

FIG. 8 shows an example of promotional content according to an embodiment of the present disclosure.

Here, promotional content PMC according to an embodiment may include an online promotional material for the purpose of promoting a predetermined specialized document SD.

In an embodiment, the promotional content PMC may be content data configured according to a preset amount of data (for example, one page).

For instance, such promotional content PMC may include summary data SMD and/or question and answer content QAC with respect to a predetermined specialized document SD.

Specifically, in the embodiment, the application 111 may obtain summary data SMD with respect to a specialized document SD in association with a predetermined deep-learning neural network.

Here, a specific method by which the application 111 according to an embodiment of the present disclosure may obtain summary data SMD may be implemented based on various disclosed algorithms and/or processes, and the present disclosure is not limited or restricted to such algorithms and/or processes.

In addition, in an embodiment, the application 111 may generate promotional content PMC including the acquired summary data SMD and/or the above-described question and answer content QAC.

In an embodiment, the application 111 may provide a promotional material production workspace based on the generated promotional content PMC (S 107).

Here, the promotional material production workspace according to an embodiment may comprise a user interface for determining promotional start content.

The promotional start content according to an embodiment may include promotional content PMC that is finally registered and shared on the specialized document sharing platform.

Specifically, the application 111 according to an embodiment may provide a promotional material production workspace for displaying the promotional content PMC generated as described above and selecting and/or editing the displayed promotional content PMC according to user input to determine promotional start content.

Here, the application 111 according to an embodiment may provide a promotional material production workspace configured to determine promotional start content based on inputs by a plurality of users.

Therefore, when there are multiple authors of a specialized document SD, the application 111 may support a collaborative process in which the multiple authors can edit and/or select one promotional content PMC together.

Additionally, in an embodiment, the application 111 may determine promotional start content based on the provided promotional material production workspace (S 109).

In other words, the promotional start content according to an embodiment may comprise promotional content PMC that is finally registered and shared on the specialized document sharing platform according to user input based on the promotional material production workspace.

For instance, in an embodiment, the application 111 may determine the promotional content PMC as promotional start content upon acquisition of user input for selecting (e.g., approving) the promotional content PMC based on the provided promotional material production workspace.

Meanwhile, in an embodiment, upon acquisition of user input for editing promotional content PMC based on the provided promotional material production workspace, the application 111 may generate promotional edited content, which is promotional content PMC edited according to the acquired user input.

Specifically, in an embodiment, the application 111 may 1) obtain user input for editing the composition of the question and answer content QAC in the promotional content PMC.

In an embodiment, the application 111 may obtain user input for selecting, deleting, and/or ordering at least one question and answer data QA (i.e., question data and answer data set) in the question and answer content QAC.

In addition, the application 111 may obtain user input for adding at least one question and answer data QA to the question and answer content QAC.

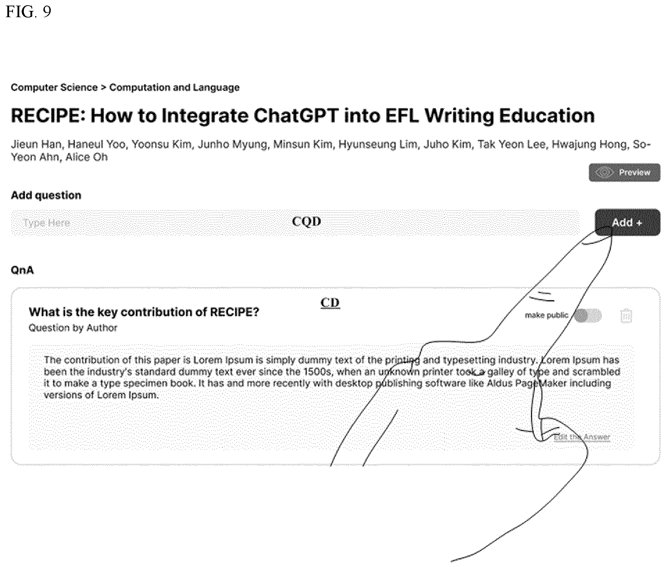

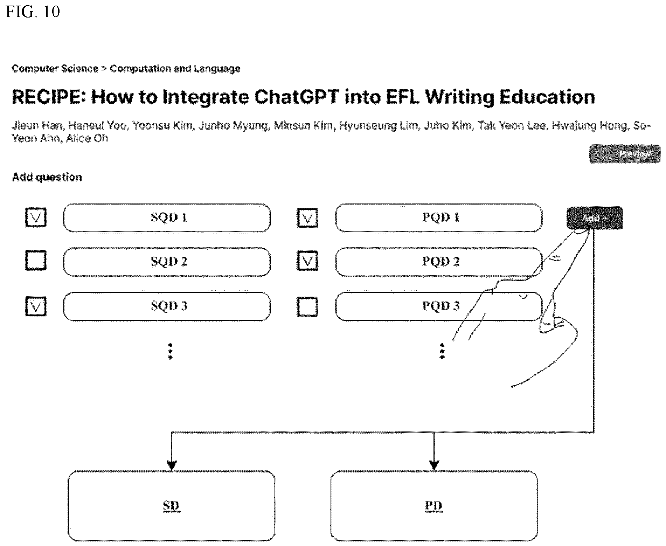

FIGS. 9 and 10 are exemplary diagrams illustrating a method of adding question and answer data QA based on user input according to an embodiment of the present disclosure.

Referring to FIG. 9, the application 111 may generate at least one piece of creative question and answer data CD based on user input in an embodiment.

Here, the creative question and answer data CD according to an embodiment may include a data set comprising question data directly created by a user and answer data for the question data.

More specifically, in an embodiment, the application 111 may obtain question data (hereinafter, creative question data CQD) directly created by a user according to user input.

In addition, in an embodiment, the application 111 may obtain answer data (hereinafter, additional answer data) for the creative question data CQD in association with the question and answer language model QALM.

Specifically, in an embodiment, the application 111 may input the creative question data CQD to the question and answer language model QALM.

Then, in an embodiment, the question and answer language model QALM may obtain answer data based on the input specialized document data and creative question data CQD as described above on the basis of the answer deep-learning model ADM.

In addition, the question and answer language model QALM may provide the obtained answer data (i.e., additional answer data) to the application 111.

Accordingly, the application 111 may obtain the additional answer data from the question and answer language model QALM in an embodiment.

In an embodiment, the application 111 may generate creative question and answer data CD including the acquired additional answer data and creative question data CQD corresponding to the additional answer data.

In addition, in an embodiment, the application 111 may obtain user input for adding the generated creative question and answer data CD to the question and answer content QAC.

According to an embodiment, the application 111 may obtain answer data (hereinafter, creative answer data) directly created by the user according to user input.

The application 111 may generate creative question and answer data CD including the acquired creative answer data and creative question data CQD corresponding to the creative answer data.

In addition, in an embodiment, the application 111 may obtain user input for adding the generated creative question and answer data CD to the question and answer content QAC.

As described above, according to certain embodiments of the present disclosure, the application 111 can provide question and answer content QAC created with a higher degree of freedom and cognitive elements by utilizing questions directly created by the user and answers thereto.

Referring to FIG. 10, the application 111 may generate at least one suggested question and answer data SD based on user input.

Here, the suggested question and answer data SD according to an embodiment may comprise a data set including additionally provided question data and answer data for the question data based on the question and answer language model QALM.

More specifically, in an embodiment, the application 111 may obtain additionally provided question data (hereinafter, suggested question data (SQD)) in association with the question and answer language model QALM.

In an embodiment, the application 111 may obtain 1) suggested question data SQD based on information included in a specialized document SD, 2) suggested question data SQD based on previously generated question data, 3) suggested question data SQD based on previously generated answer data, and/or 4) suggested question data SQD based on other information related to information included in a specialized document SD.

In addition, the application 111 may obtain answer data (hereinafter, suggested answer data) for suggested question data SQD in association with the question and answer language model QALM in an embodiment.

Specifically, the application 111 may input suggested question data SQD to the question and answer language model QALM in an embodiment.

Then, the question and answer language model QALM may obtain answer data based on the specialized document data and suggested question data SQD input as described above on the basis of the answer deep-learning model ADM in an embodiment.

In addition, the question and answer language model QALM may provide the acquired answer data (i.e., suggested answer data) to the application 111.

Then, the application 111 may acquire the suggested answer data from the question and answer language model QALM in an embodiment.

In an embodiment, the application 111 may generate suggested question and answer data SD including the acquired suggested answer data and the suggested question data SQD corresponding to the suggested answer data.

In addition, in an embodiment, the application 111 may acquire user input for adding the generated suggested question and answer data SD to the question and answer content QAC.

According to an embodiment, the application 111 may acquire answer data (e.g., creative answer data) directly created by the user according to user input.

The application 111 may generate suggested question and answer data SD including the acquired creative answer data and suggested question data SQD corresponding to the creative answer data.

In addition, in an embodiment, the application 111 may obtain user input for adding the generated suggested question and answer data SD to the question and answer content QAC.

As described above, the application 111 can generate question and answer content QAC based on at least one piece of question and answer data QA additionally suggested through the question and answer language model QALM, thereby minimizing the difficulty of creating questions for promoting a specialized document SD and providing question and answer content QAC based on a more expanded variety of choices.

Referring to FIG. 10, in an embodiment, the application 111 may generate at least one piece of proposed question and answer data PD based on input of another user.

Here, the proposed question and answer data PD according to an embodiment may include a data set comprise question data directly created by another user (e.g. a reader or the like in an embodiment) and answer data for the question data.

Specifically, in an embodiment, the application 111 may obtain question data (hereinafter, proposed question data (PQD)) directly created by another user in association with the terminal 100 of the other user.

In addition, in an embodiment, the application 111 may obtain answer data (hereinafter, proposed answer data) for the proposed question data PQD in association with the question and answer language model QALM.

Specifically, in an embodiment, the application 111 may input the proposed question data PQD to the question and answer language model QALM.

Then, the question and answer language model QALM may obtain answer data based on the specialized document data and proposed question data PQD input as described above on the basis of the answer deep-learning model ADM in an embodiment.

In addition, the question and answer language model QALM may provide the obtained answer data (i.e., proposed answer data) to the application 111.

Accordingly, in an embodiment, the application 111 can obtain the proposed answer data from the question and answer language model QALM.

In an embodiment, the application 111 may generate proposed question and answer data PD including the acquired proposed answer data and proposed question and answer data PQD corresponding to the proposed answer data.

In addition, in an embodiment, the application 111 may obtain user input for adding the generated proposed question and answer data PD to the question and answer content QAC.

According to an embodiment, the application 111 may obtain answer data (e.g., creative answer data) directly created by the user according to user input.

The application 111 may generate proposed question and answer data PD including the acquired creative answer data and proposed question and answer data PQD corresponding to the creative answer data.

In addition, in an embodiment, the application 111 may obtain user input for adding the generated proposed question and answer data PD to the question and answer content QAC.

In this manner, according to some embodiments of the present disclosure, the application 111 can generate question and answer content QAC including question data and answer data generated by other users including reader users who subscribe to the specialized document SD other than the author user who created the specialized document SD.

Accordingly, the application 111 can actively accept questions that demanders of the specialized document may be curious about and interested in, and provide promotional content PMC including question and answer content QAC reflecting these questions.

Thus, according to certain embodiments of the present disclosure, the application 111 can obtain user input for adding the above-described creative question and answer data CD, suggested question and answer data SD, and/or proposed question and answer data PD to the question and answer content QAC.

In an embodiment, the application 111 may edit the composition of the question and answer content QAC in the promotional content PMC according to the user input obtained as described above (e.g., user input for selecting at least one piece of question and answer data QA in the question and answer content QAC, user input for deleting the same, user input for ordering the same, and/or user input for adding the same).

Meanwhile, in an embodiment, the application 111 may obtain 2) user input for editing the content of the question and answer content QAC in the promotional content PMC.

In an embodiment, the application 111 may obtain user input for modifying (e.g., correcting, deleting, and/or adding) the content of predetermined question data and/or answer data in the question and answer content QAC.

In an embodiment, the application 111 may edit the content of the question and answer content QAC in the promotional content PMC on the basis of the obtained user input.

According to an embodiment, the application 111 may provide an automatic modified related content update function.

Here, the automatic modified related content update function according to an embodiment may comprise a function of automatically detecting and modifying content (hereinafter, related data) related to modified content (hereinafter, modified data).

Specifically, the application 111 may detect at least one piece of data related to a piece of predetermined modified data in the question and answer content QAC in an embodiment.

In an embodiment, the application 111 may detect at least one piece of related data including information (e.g., text, image, table, and/or formula) having a similarity of a predetermined level or more to information included in the modified data.

In an embodiment, the application 111 may collectively correct the detected related data by applying a modification history applied to the modified data.

For example, if a modification history applied to first modified data in a specialized document SD is changing "main contribution" to "key contribution", the application 111 can change all "main contributions" existing in the specialized document SD to "key contributions".

Therefore, in an embodiment, the application 111 may provide a function (i.e., an automatic modified related content update function) of, when a user modifies specific content in question and answer content QAC, automatically correcting content related to the specific content in accordance with the modification.

Therefore, according to certain embodiments of the present disclosure, the application 111 can improve user convenience and usability for editing question and answer content QAC and thereby enhance the user satisfaction.

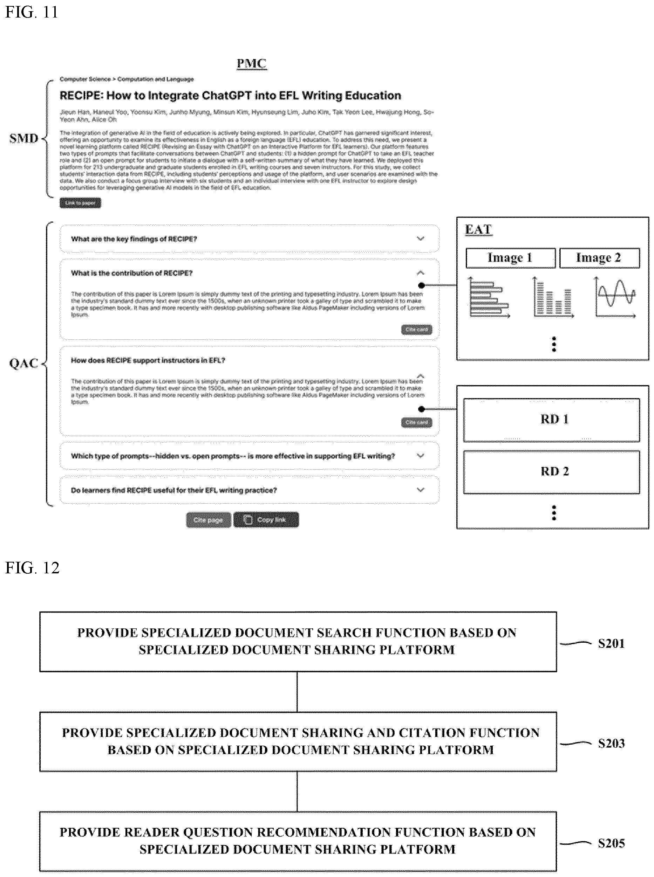

FIG. 11 is a diagram illustrating a method of providing an editing assistant tool and/or a related document search function according to an embodiment of the present disclosure.

Referring to FIG. 11, the application 111 may provide an editing assistant tool (EAT) in an embodiment.

Here, the editing assistant tool according to an embodiment may comprise a user interface configured to provide a predetermined image, table, and/or formula related to a predetermined specialized document in a form that is easily inserted into question and answer content QAC.

For example, the editing assistant tool may include a Markdown editor, etc.

In an embodiment, the application 111 may provide an editing assistant tool (EAT) that provides a predetermined image, table, and/or formula included in a specialized document SD in a form that can be utilized on question and answer content QAC.

That is, in the embodiment, the application 111 may enable the user to easily and conveniently utilize various images, tables, and/or formulas related to a specialized document SD by using the editing assistance tool EAT when editing question and answer content QAC.

Therefore, the application 111 can provide a question and answer content QAC editing process that can easily utilize richer data.

In addition, referring to FIG. 11, the application 111 may provide a related document search function in an embodiment.

Here, the related document search function according to an embodiment may include a function of automatically detecting and providing a specialized document SD (hereinafter, related document (RD)) related to predetermined question data and/or answer data.

Specifically, the application 111 may obtain user input for selecting predetermined question data and/or answer data in question and answer content QAC in an embodiment.

In addition, the application 111 may detect at least one specialized document SD related to the question data and/or answer data (hereinafter, selected data) selected according to the obtained user input in an embodiment.

Here, a specific method for the application 111 according to an embodiment of the present disclosure to detect a related document RD may be implemented on the basis of various disclosed algorithms and/or processes, and the present disclosure is not limited or restricted to such algorithms and/or processes.

In addition, in an embodiment, the application 111 may provide at least one detected related document RD by matching the same with the selected data.

Therefore, the application 111 can enable the user to easily refer to and utilize the specialized document SD related to the question data and/or answer data without performing a separate search when editing the question and answer content QAC.

Accordingly, the application 111 can support users such that the users easily compare their specialized documents SD with other specialized documents SD and easily highlight differences therebetween on the basis of the additional related document information provided as described above.

As described above, the application 111 configured to obtain user input for editing the composition and/or content of the question and answer content QAC in the promotional content PMC may generate promotional edited content according to the obtained editing input in an embodiment.

In addition, in an embodiment, the application 111 may determine the promotional edited content as promotional start content upon acquisition of user input for selecting (i.e., approving) the promotional edited content on the basis of the promotional material production workspace.

Accordingly, the application 111 can allow users to create customized promotional start content optimized for forms in which the users can have a higher degree of freedom.

According to an embodiment, the application 111 may provide a question and answer content amount adjustment function.

Here, the question and answer content amount adjustment function according to an embodiment may comprise a function of compressing or increasing question and answer content QAC in determined promotional start content according to a predetermined method when the determined promotional start content does not meet a preset data amount (for example, one page) condition.

Specifically, in an embodiment, the application 111 may reduce the amount of at least one piece of answer data in the promotional start content when the promotional start content exceeds the preset data amount (for example, when the amount of the promotional start content exceeds one page).

In an embodiment, the application 111 may obtain abbreviated data for at least one piece of answer data in the promotional start content in association with a predetermined deep-learning neural network.

Here, the abbreviated data according to the embodiment may include data obtained by reducing the amount of predetermined answer data according to a predetermined method (e.g., summarization).

Here, a specific method by which the application 111 according to the embodiment of the present disclosure obtains the abbreviated data may be implemented on the basis of various disclosed algorithms and/or processes, and the present disclosure is not limited or restricted to such algorithms and/or processes.

In an embodiment, the application 111 may obtain abbreviated data for each piece of answer data in the promotional start content on the basis of user input.

That is, according to an embodiment, the application 111 may obtain abbreviated data according to content directly input by the user.

In addition, the application 111 may replace answer data corresponding to the obtained abbreviated data with the obtained abbreviated data in an embodiment.

That is, the application 111 may replace the answer data in the promotional start content with the abbreviated data.

In an embodiment, upon acquisition of user input (e.g., selection input) for the abbreviated data in the promotional start content, the application 111 may provide the answer data (hereinafter, original data) corresponding to the abbreviated data.

On the other hand, if the promotional start content is less than the preset data amount (e.g., when the amount of the promotional start content is equal to or less than one page), the application 111 may additionally provide at least one piece of suggested question and answer data SD as described above in the embodiment.

Then, the application 111 may further include suggested question and answer data SD (hereinafter, added question and answer data) selected according to user input from among the at least one piece of additionally provided suggested question and answer data SD in the question and answer content QAC in the promotional start content.

Here, the application 111 may determine whether the added question and answer data satisfies the preset data amount condition when including the added question and answer data in the question and answer content QAC in an embodiment.

If the preset data amount condition is satisfied, the application 111 may insert the added question and answer data into the question and answer content QAC within the promotional start content.

On the other hand, if the preset data amount condition is not satisfied, the application 111 may repeatedly perform the above-described question and answer content amount adjustment function.

In this manner, according to some embodiments of the present disclosure, the application 111 may provide a function of easily processing the determined promotional start content into a form that satisfies the preset amount condition.

In addition, in an embodiment, the application 111 may provide the determined promotional start content (S 111).

Specifically, in an embodiment, the application 111 may provide the promotional start content on the basis of the specialized document sharing platform.

For example, in an embodiment, the application 111 may share and provide the promotional start content determined as above to users (e.g. authors and/or readers in an embodiment) using the specialized document sharing platform by registering the promotional start content on the specialized document sharing platform.

As described above, in an embodiment, the application 111 can generate question and answer content QAC for a predetermined specialized document SD using the question and answer language model QALM according to an embodiment of the present disclosure, provide an interface by which the generated question and answer content QAC can be freely edited, and provide promotional content PMC based on the generated question and answer content QAC.

Accordingly, the application 111 can easily provide high-quality promotional materials optimized for user needs while including in-depth and practical question and answer content obtained from a deep-learning model specialized for specialized documents SD.

### [Method of providing specialized document sharing platform on reader side]

FIG. 12 is a flowchart for illustrating a method of providing a specialized document sharing platform on a reader side according to an embodiment of the present disclosure.

Referring to FIG. 12, the application 111 may provide a specialized document search function based on the specialized document sharing platform (S201).

Specifically, in an embodiment, the application 111 may provide a specialized document search function for searching for at least one specialized document SD (hereinafter, registered document) registered in the specialized document sharing platform.

For example, in an embodiment, the application 111 may provide the specialized document search function based on promotional start content corresponding to each registered document.

Specifically, in an embodiment, the application 111 may obtain at least one search keyword based on user input.

In addition, the application 111 may detect at least one piece of promotional start content including the obtained search keyword.

That is, the application 111 may detect at least one piece of promotional start content based on summary data SMD and/or question and answer content QAC including a predetermined search keyword.

In addition, the application 111 may provide the at least one piece of detected promotional start content through the specialized document sharing platform.

In other words, the application 111 may provide at least one piece of promotional start content corresponding to a search keyword according to user input as a search result.

In this manner, the application 111 can improve the search speed and/or performance by performing a specialized document search process by utilizing content (e.g., promotional start content) that efficiently and specifically implies and expresses the content of a specialized document SD.

In addition, the application 111 can provide a specialized document search service for allowing users to more easily and efficiently recognize specialized documents SD related to content that the users want by providing search results in the form of promotional start content.

In addition, in an embodiment, the application 111 may provide a specialized document sharing and citation function based on the specialized document sharing platform (S203).

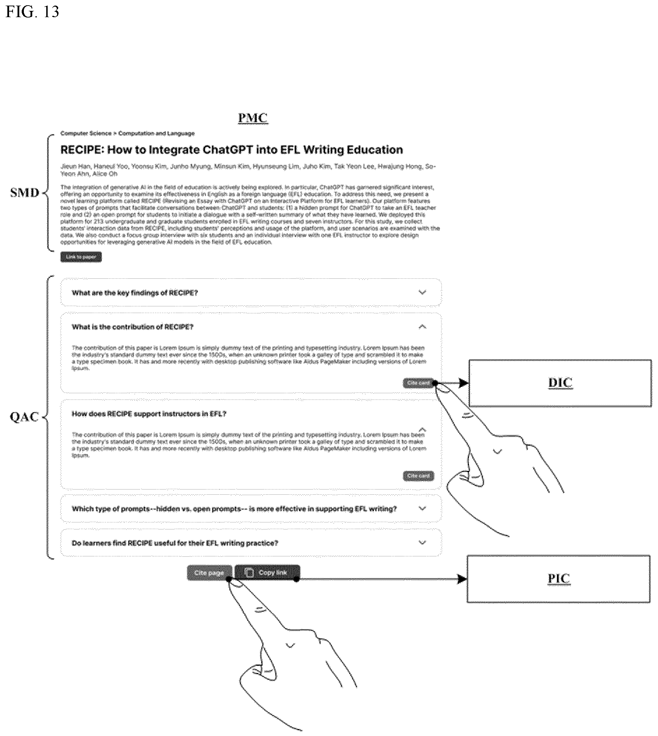

FIG. 13 is an exemplary diagram for illustrating a method of providing the specialized document sharing and citation function according to an embodiment of the present disclosure.

Referring to FIG. 13, the application 111 may provide the specialized document sharing and citation function for sharing and citing promotional start content corresponding to a predetermined registered document.

For example, in an embodiment, the application 111 may assign an identification code (hereinafter, promotional material identification code (PIC)) corresponding to each piece of promotional start content.

Here, the PIC according to an embodiment may include a Uniform Resource Locator (URL) by which a predetermined promotional start content can be accessed and/or a time stamp that specifies a time of citation.

In addition, the application 111 according to an embodiment may provide a sharing and citation function for predetermined promotional start content on the basis of the PIC as described above.

In an embodiment, the application 111 may obtain user input for requesting sharing and/or citation for predetermined promotional start content.

Then, the application 111 may detect a PIC matching the corresponding promotional start content.

The application 111 may output and provide the detected PIC in a predetermined manner (e.g., in the form of a post draft that can be posted on a specific service).

In addition, in an embodiment, the application 111 may provide a specialized document sharing and citation function for sharing and citing question and answer data QA included in the question and answer content QAC in the predetermined promotional start content.

Specifically, in an embodiment, the application 111 may assign an identification code (hereinafter, question and answer identification code (DIC)) corresponding to each piece of question and answer data QA.

Here, the DIC according to an embodiment may include a URL by which the promotional start content including the corresponding question and answer data QA can be accessed and/or a time stamp that specifies a time of citation.

In addition, in an embodiment, the application 111 may provide a sharing and citation function for predetermined question and answer data QA on the basis of the DIC as above.

In an embodiment, the application 111 may obtain user input for requesting sharing and/or citation of predetermined question and answer data QA.

Then, the application 111 may detect a DIC matching the question and answer data QA.

Then, the application 111 may output and provide the detected DIC in a predetermined manner (e.g., in the form of a post draft that can be posted on a specific service).

Here, in an embodiment, the application 111 may provide a notation format (e.g., citation notation) suggested when a PIC and/or a DIC are cited as a reference as a pop-up.

For example, the application 111 may provide a citation notation based on an APA version, an MLA version, or a Bibtex version as a pop-up.

In this manner, according to some embodiments of the present disclosure, the application 111 can provide a technical configuration which can share and cite promotional start content for a specialized document SD registered on the specialized document sharing platform, or share and cite question and answer data QA in the question and answer content QAC included in the promotional start content.

Therefore, the application 111 can increase the accessibility to registered documents on the specialized document sharing platform and can also further enhance the influence of the author insight related to the registered documents.

According to an embodiment, when a certain promotional start content and/or question and answer data QA are cited based on a PIC and/or a DIC, the application 111 may provide information (e.g., citation credit) for notifying the author who wrote the relevant registered document of the citation.

Therefore, the application 111 may enable the author to ascertain the status of sharing and citation of his/her specialized document SD in real time.

In addition, in an embodiment, the application 111 may provide a reader question recommendation function based on the specialized document sharing platform (S205).

For instance, in an embodiment, the application 111 may provide a reader question recommendation function for obtaining and providing proposed question data PQD for a predetermined registered document.

More specifically, in an embodiment, the application 111 may provide a user interface (hereinafter, a proposed question input interface) through which the proposed question data PQD as described above can be obtained and provided on the basis of the specialized document sharing platform.

In other words, the application 111 may provide a proposed question input interface through which the proposed question data PQD, which is question data directly created by a user (e.g. a reader in an embodiment) other than the author user who wrote the registered document, can be obtained and provided.

In addition, the application 111 may obtain proposed question data PQD for a predetermined registered document on the basis of input of a user (a reader in the embodiment) based on the provided proposed question input interface.

In addition, the application 111 may provide the obtained proposed question data PQD to the terminal 100 of the author who wrote the relevant registered document.

Accordingly, the application 111 can generate question and answer content QAC based on the proposed question and answer data PD described above.

Therefore, according to some embodiments of the present disclosure, the application 111 can implement promotional start content that actively reflects questions that readers are curious about and interested in regarding a specific registered document.

Here, the application 111 may set a disclosure scope for the proposed question data PQD on the basis of input of a user (a reader in the embodiment) based on the proposed question input interface and/or input of a user (an author in the embodiment) based on the promotional material production workspace in the embodiment.

In an embodiment, the application 111 may set the disclosure scope according to user input for setting either "full disclosure", which discloses the proposed question data PQD to all users using the specialized document disclosure platform, or "author disclosure", which discloses the proposed question data PQD only to the author who wrote the relevant specialized document SD.

In addition, in an embodiment, the application 111 may provide the proposed question data PQD to all users or the author according to the set disclosure scope.

Hence, the application 111 can more effectively protect the intellectual rights of readers and/or authors by selectively determining a disclosure scope of question data proposed by readers.

As described above, according to certain embodiments of the present disclosure, a method and system for providing a specialized document sharing platform may generate question and answer content QAC for a specialized document SD using a predetermined deep-learning neural network and provide promotional content PMC based on the generated question and answer content QAC, thereby enabling a user to automatically obtain data in a question and answer format that efficiently includes the content of the specialized document SD without making a separate effort, and utilizing the promotional content PMC based on the obtained data.

A method and system for providing a specialized document sharing platform according to some embodiments of the present disclosure may generate question and answer content QAC using a language model specialized for specialized documents SD, thereby providing question and answer content QAC that resolves the problems of hallucination and vague answers, which are limitations of existing general-purpose language models (e.g., OpenAI GPT, etc.).

Accordingly, a method and system for providing a specialized document sharing platform according to certain embodiments of the present disclosure may provide question and answer content QAC that is faithful to questions, hallucination-controlled, and evidential on the basis of an advanced inference/estimation function implemented through a process similar to human cognitive inference.

In addition, a method and system for providing a specialized document sharing platform according to certain embodiments of the present disclosure may provide promotional content PMC based on a user interface UI through which generated question and answer content QAC can be freely edited, thereby supporting users to create customized promotional materials optimized for forms that the users want with a higher degree of freedom beyond the level of simply sharing specialized documents SD and to actively perform promotional activities using the same.

Therefore, a method and system for providing a specialized document sharing platform according to some embodiments of the present disclosure may easily generate and utilize high-quality promotional materials optimized for user needs while including in-depth and practical question and answer content obtained from a deep-learning model specialized for specialized documents SD.

The embodiments of the present disclosure described above may be implemented in the form of program instructions that can be executed through various computer components and recorded on a computer-readable recording medium. The computer-readable recording medium may include program instructions, data files, data structures, etc. alone or in combination. The program instructions recorded on the computer-readable recording medium may be those specially designed and configured for the present disclosure or those known to and usable by those skilled in the art of computer software. Examples of computer-readable recording media include magnetic media such as hard disks, floppy disks, and magnetic tapes, optical recording media such as CD-ROMs and DVDs, magneto-optical media such as floptical disks, and hardware devices specifically configured to store and execute program instructions, such as ROMs, RAMs, and flash memories. Examples of program instructions include not only machine language codes generated by a compiler, but also high-level language codes that can be executed by a computer using an interpreter or the like. Hardware devices may be changed into one or more software modules to perform processing according to the present disclosure, and vice versa.

## Claims

1. A computer-implemented method comprising:
obtaining a specialized document;
generating question and answer content for the specialized document using a question and answer language model;
generating promotional content, which comprises an online promotional material for the specialized document, based on the question and answer content for the specialized document;
providing a promotional material production workspace based on the promotional content;
determining promotional start content, which comprises the promotional content to be registered on a specialized document sharing platform, using the promotional material production workspace; and
providing the promotional start content using the specialized document sharing platform.

2. The computer-implemented method of claim 1, wherein the generating of the question and answer content comprises:
inputting the specialized document to the question and answer language model;
outputting at least one piece of question and answer data including question data and answer data in response to the input first specialized document by the question and answer language model; and
generating the question and answer content based on the at least one piece of question and answer data.

3. The computer-implemented method of claim 2, wherein the outputting of the at least one piece of question and answer data by the question and answer language model comprises:
outputting at least one piece of the question data using a question deep-learning model included in the question and answer language model; and
outputting at least one piece of the answer data corresponding to each of the at least one piece of the question data using an answer deep-learning model included in the question and answer language model.

4. The computer-implemented method of claim 3, wherein:
the answer deep-learning model comprises a deep learning model for outputting the answer data by performing multi-step inference processes comprising:
determining an evidence paragraph related to the question data in the specialized document;
obtaining at least one piece of rationale data related to the question data based on the evidence paragraph; and
performing data processing based on the rationale data.

5. The computer-implemented method of claim 1, wherein the promotional content comprises content data configured based on a predetermined data amount condition.

6. The computer-implemented method of claim 1, wherein the determining of the promotional start content comprises generating promotional edited content, which is the promotional content edited according to user input, using the promotional material production workspace.

7. The computer-implemented method of claim 6, wherein the generating of the promotional edited content comprises one or both of generating the promotional edited content according to user input for editing a composition of the question and answer content in the promotional content, or generating the promotional edited content according to user input for editing content of the question and answer content in the promotional content.

8. The computer-implemented method of claim 6, wherein the generating of the promotional edited content comprises providing an editing assistant tool, which includes a user interface for providing one or more of a predetermined image, table, or formula related to the specialized document in a form configured to be included in the question and answer content in the promotional content.

9. The computer-implemented method of claim 6, wherein the generating of the promotional edited content comprises performing related document search for automatically detecting at least one other specialized document related to the question and answer content in the promotional content.

10. The computer-implemented method of claim 6, wherein the determining of the promotional start content comprises selecting one of the promotional content or the promotional edited content as the promotional start content based on the user input using the promotional material production workspace.

11. The computer-implemented method of claim 1, further comprising performing specialized document search based on the promotional start content using the specialized document sharing platform.

12. The computer-implemented method of claim 1, further comprising performing specialized document sharing and citation based on the promotional start content using the specialized document sharing platform.

13. The computer-implemented method of claim 12, wherein the performing of the specialized document sharing and citation comprises one or both of providing a promotional material identification code including an access uniform resource locator (URL) and a time stamp related to the promotional start content, or providing a question and answer identification code including an access URL and a time stamp related to the question and answer content in the promotional start content.

14. The computer-implemented method of claim 1, further comprising performing reader question recommendation for providing question data created by a user who receives the specialized document using the specialized document sharing platform.
